# EUROPEAN PATENT APPLICATION

(11) **EP 2 095 925 A1**
(43) Date of publication of application: **02.09.2009**
(21) Application number: 08425121.4
(22) Date of filing: 28.02.2008
(51) Int. Cl.: B29B 17/02

(54) **Process for recycling polycarbonate supports and relative apparatus**

(71) Applicant: Optical Media Group S.P.A., 20068 Peschiera Borromeo (MI) (IT)
(72) Inventor: Simone, Mauro, 20097 San Donato Milanese (Milano) (IT); Confalonieri, Gianni, 20125 Milano (IT)
(74) Representative: Pesce, Michele

(57) **Abstract**

A process and relative apparatus for recycling a support comprising at least two polycarbonate layers joined together at their surfaces by adhesive means, comprising the step of separating said polycarbonate layers by separator means which act in the interface plane between said two polycarbonate layers, in such a manner that said polycarbonate layers maintain their initial configuration.

## Description

The present invention relates to a process for recycling polycarbonate supports and relative apparatus in accordance with the preamble of the main claims.

Wide-distribution products, such as films, games, media and/or interactive culture, music, etc., are known to be currently distributed largely via optically read discs such as CDs and DVDs.

A DVD comprises two discs glued together. Each disc presents a plurality of superposed layers, for example:
- a polycarbonate layer, on the surface of which the information (image, music, data files etc.) is stored,
- a reflecting layer formed on the surface of the polycarbonate layer; this layer is defined by a metal layer (aluminium/silver etc.) serving to reflect the reader laser beam.

For example, a surface of one disc is coated with a silver layer while the surface of the other disc is coated with an aluminium layer.

The surfaces coated in this manner are covered with an acrylic-based adhering layer, mutually superposed and pressed to obtain the complete DVD.

A layer carrying a printed image (typically containing publicity information or product descriptions) is then formed on a surface of the DVD obtained in this manner.

In contrast, CDs are formed from a single polycarbonate layer, on the surface of which the information is stored. This surface is then coated with a metallization layer, a protection layer and a layer carrying a printed image (typically containing publicity information or product descriptions).

The CDs and DVDs are then preserved in respective cases (DVD cases, slims boxes, PVC envelopes, cardboard cases, Tyvek cases, etc.) in which covers or the like can be provided. These cases are then covered with a protective layer (Cellophane) before being sold.

Increasing attention is currently given to the recovery/recycling/disposal of obsolete, unsold and sequestered CDs and DVDs.

A first known technical solution for satisfying this need is to shred the CDs and

DVDs to be disposed of.

Although advantageous from various aspects, this first solution presents the drawback that the shredded product obtained contains a plurality of materials: polycarbonate, metal layers, glues and inks. The product obtained can be recycled only as low-value substances.

An object of the present invention is therefore to provide a process for recycling impurity-free polycarbonate, in particular originating from DVDs.

This object is attained by a recycling process and relative apparatus, the inventive characteristics of which are defined by the accompanying claims.

The invention will be more apparent from the following detailed description of one embodiment thereof, provided by way of non-limiting example and illustrated in the accompanying drawings, in which:
Figure 1 is a perspective view of an apparatus according to the invention;
Figure 2 is a perspective view of support and separation means of the machine of Figure 1;
Figures 3 and 4 are sections through the support and separation means of Figure 2.

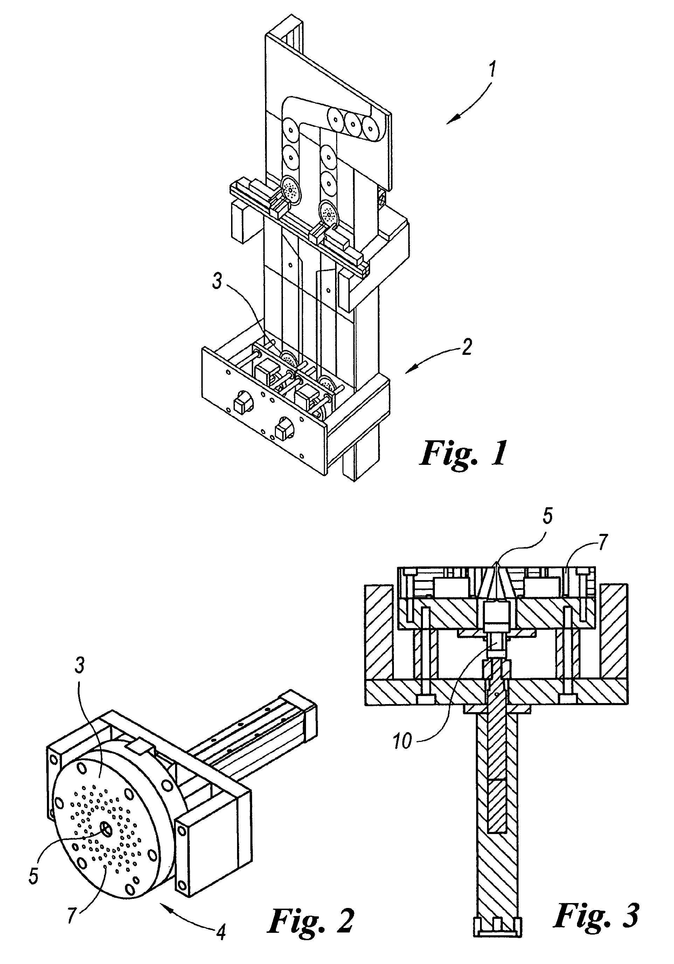

With reference to Figure 1, this shows an apparatus 1 for recycling polycarbonate supports, for example CDs/DVDs.

Specifically, a support comprises at least two polycarbonate layers joined together at their respective surfaces by adhesive means. According to the invention, these polycarbonate layers are separated from each other by separator means 3 which act in the interface plane between the two layers, such that these layers maintain their initial configuration. For example, all the surfaces of these polycarbonate layers are substantially flat.

For example, the separator means 3 comprise at least one pair of wedge elements 5 to be inserted between the two polycarbonate layers.

The two polycarbonate layers form one DVD, these layers being provided with a central hole, the wedge elements 5 being inserted between the two polycarbonate layers at the central hole.

For example, the wedge elements 5 are connected to piston element 6 able to move axially to the surface of the DVDs.

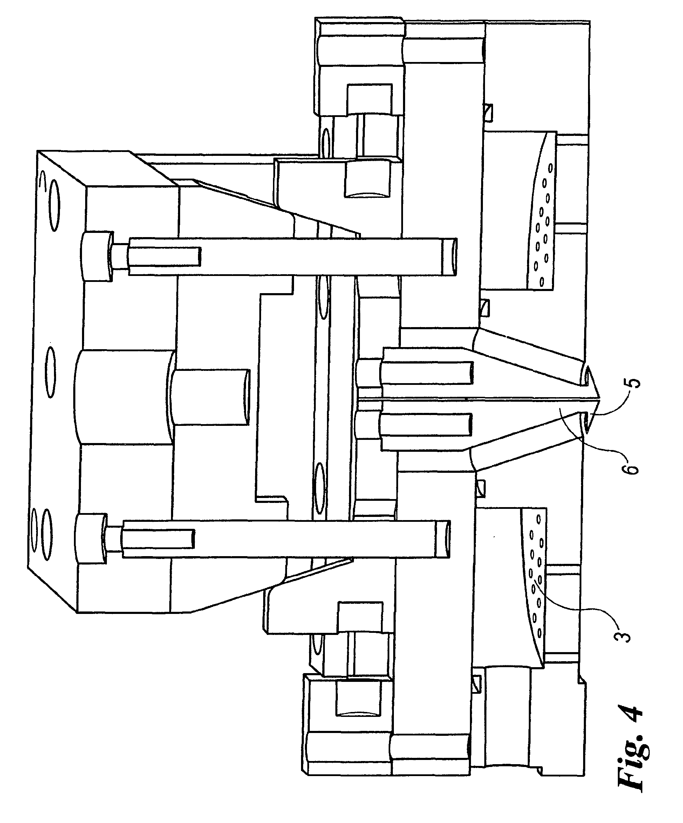

Specifically, having fixed the DVD between support means 3, the piston element 3 is moved axially to the DVD in a first direction until the wedge elements 5 become aligned with the interface plane between the polycarbonate layers, as shown in Figure 4. At this point, the wedge elements 5 are moved radially with programmed translatory movement along the DVD axis until inserted between the two polycarbonate layers. The piston element 6 is then moved axially to the interface plane, in a second direction opposite the first to cause separation of the two layers.

Advantageously, the support means 3 are provided with two opposing arms, one of which is shown for example in Figures 2 and 3, they each comprising a discshaped suction head 4. Holes are provided in the facing surfaces of the suction heads 4 and are connected to suction means to maintain the support in position during the separation step.

For example each suction head 4 presents an opening through which the piston element 6 can slide.

In a particularly advantageous embodiment of the invention, before separating the two polycarbonate layers the support is heated to reduce the adhesive power of the adhesive means. These adhesive means comprise a glue, for example of acrylic type.

In this manner the separation of the two polycarbonate layers, for example forming the two faces of a DVD (digital versatile disc) is simpler and easily repeatable.

Advantageously, the support is heated to a temperature between 70°C and 90°C in less than 4 seconds.

In one embodiment of the invention, the heating means comprise at least one infrared (IR) source, for example of between 50 and 1500W power.

In this manner the thermal inertia of the system can be reduced so as to attain the necessary temperature in quick time.

Advantageously, the IR source is positioned between 5 and 20 cm from the support, its IR beam being substantially perpendicular to the support surface.

By heating before mechanical separation, the risks of forming cracks or fractures in the polycarbonate layers during separation are reduced, with evident reduction in the time required for the separation operation.

After obtaining the two polycarbonate layers, they are surface-cleaned if coated with a surface layer.

Specifically, the apparatus comprises means for removing a surface layer, for example a metal layer, from the polycarbonate layers in order to obtain only clean polycarbonate.

For example these means for removing the surface portion of the polycarbonate layer comprise a blade arranged to interfere with the surface of the polycarbonate layer, so that forced dragging of the blade or support causes removal of a surface portion of the support.

In particular, the polycarbonate layers are made to pass through these means or through further means to remove a surface portion of this layer, until only the polycarbonate layer remains.

The polycarbonate layer obtained in this manner can be reused.

Advantageously the apparatus of the invention can be integrated into a single device, in which the supports to be recycled are conveyed through the device by conveyor means, for example guides, as shown in Figure 1 which shows DVDs fed to the apparatus of the invention. In particular, in the embodiment shown, two recovery/recycling lines can be implemented in a single apparatus to increase the number of DVDs processed.

Advantageously according to the invention, CDs presenting a single surface to be cleaned can be fed to the means for removing the surface portion of metal or acrylic coating.

A process for the recovery/recycling/disposal of obsolete, unsold or confiscated CDs and DVDs will now be described.

The process comprises a first step of removing the outer protection layer, for example cellophane, in which the packages to be recycled are wrapped. The term "package" means the combined plastic case (box), the paper parts (cover, internal booklet) and data support, for example a CD or DVD.

This step is implemented using a known unwrapping apparatus.

The raw material cellophane (PP - co-extruded polypropylene) is collected, compacted and fed to reuse.

The plastic cases are then opened, for example using a mechanical arm, and positioned to present themselves to the next steps in a horizontal position.

All the paper components, covers and any booklets, are then removed from the case, using for example two mechanical arms provided with suckers, in two suitably timed successive steps. The removed paper components are deposited in suitable containers to be fed firstly to compacting and then to recycling.

The support is then removed from the case.

Using for example a pressing cylinder, which releases the support from its seat inside the case, and using for example a mechanical arm provided with suckers, the support is removed from the case and fed to a suitably arranged stacker.

Having obtained the support, for example a DVD, comprising at least two layers of polycarbonate joined together at their respective surfaces by adhesive means, the process for recycling this support, according to the invention, comprises the step of separating the polycarbonate layers by separator means which act in the interface plane between the two layers, such that these layers maintain their initial configuration.

Advantageously the support is heated prior to the separation step, to reduce the adhesive power of the adhesive means. In particular, this step is implemented in the manner already described with reference to the apparatus of the invention.

For example the support is heated to a temperature between 70°C and 90°C in less than 4 seconds.

Advantageously, the heating step uses an infrared source, comprising lamps with a power between 50 and 1500W.

In one embodiment, the infrared source is positioned between 5 and 20 cm from the support with the IR beam substantially perpendicular to the support surface.

This embodiment is particularly advantageous if a surface of the support is substantially flat.

The recycling process of the invention also comprises the step of removing the metal/acrylic surface coating layer, to obtain a polycarbonate layer without impurities.

In particular, if recycling DVDs. this surface removal step is aimed at initially removing at least any covering layers carrying graphic images on a surface of the complete DVD, followed, after separating the DVD into two discs, by continuing this surface removal step to remove impurities from the surfaces which have been separated.

Having obtained the polycarbonate layers free of impurities, these layers can for example be shredded for subsequent use.

In conclusion, the process and apparatus of the invention enable constituent polycarbonate layers of supports such as DVDs and CDs to be recycled, so considerably reducing pollution related to the disposal of these supports.

## Claims

1. A process for recycling a support comprising at least two polycarbonate layers joined together at their surfaces by adhesive means, **characterised by** comprising the step of separating said polycarbonate layery by separator means which act in the interface plane between said two polycarbonate layers, in such a manner that said polycarbonate layers maintain their initial configuration.

2. A support recycling process as claimed in claim 1, **characterised in that** before effecting the separation step said support is subjected to a heating step to reduce the adhesive power of said adhesive means.

3. A support recycling process as claimed in claim 2, **characterised in that** said adhesive means are in the form of a glue, said support being heated to a temperature between 70°C and 90°C in less than 4 seconds.

4. A support dividing process as claimed in claim 2, **characterised in that** said heating step uses an infrared source.

5. A support dividing process as claimed in claim 4, **characterised in that** said infrared source comprises lamps using a power between 50 and 1500W.

6. A support dividing process as claimed in claim 4, **characterised in that** said infrared source is positioned between 5 cm and 20 cm from said support, with the IR beam substantially perpendicular to the support surface.

7. A support recycling process as claimed in claim 1, in which at least one of said polycarbonate layers is coated with a surface layer, **characterised by** removing said surface layer.

8. An apparatus for recycling a support comprising at least two polycarbonate layers joined together at their respective surfaces by adhesive means, **characterised by** comprising separator means which act in the interface plane between said two polycarbonate layers to separate them in such a manner that they maintain their initial configuration even after separation.

9. A support recycling apparatus as claimed in claim 8, **characterised by** comprising means for heating said support to reduce the adhesive power of the adhesive means.

10. A support recycling apparatus as claimed in claim 9, **characterised in that** said support heating means comprise at least one infrared source.

11. A support recycling apparatus as claimed in claim 9, **characterised in that** said infrared source is at least one lamp of power between 50 and 1500W.

12. A support recycling apparatus as claimed in claim 10, **characterised in that** said at least one infrared source is positioned between 5 cm and 20 cm from said support, with the IR beam substantially perpendicular to the support surface.

13. A support recycling apparatus as claimed in claim 8, **characterised in that** said means for separating said polycarbonate layers comprise at least one support element provided with wedge means to be inserted between said two polycarbonate layers.
